# FASCICULE DE BREVET EUROPEEN

(11) **EP 3 213 214 B1**
(45) Date de publication et mention de la délivrance du brevet: **03.03.2021**
(21) Numéro de dépôt: 15801477.9
(22) Date de dépôt: 27.10.2015
(51) Int. Cl.: G06F 11/263, G06F 11/273

(54) **BANC ET LOGICIEL POUR TESTER UN APPAREILLAGE ELECTRIQUE, NOTAMMENT UN CALCULATEUR**
PRÜFSTAND UND SOFTWARE FÜR DIE PRÜFUNG EINER ELEKTRISCHEN VORRICHTUNG, INSBESONDERE EINES COMPUTERS
BENCH AND SOFTWARE FOR TESTING ELECTRICAL EQUIPMENT, IN PARTICULAR A COMPUTER

(30) Priorité: 30.10.2014 FR 1460434
(43) Date de publication de la demande: 06.09.2017
(73) Titulaire: SPHEREA Test & Services, 31023 Toulouse Cedex 1 (FR)
(72) Inventeur: FAVARCQ, Nicolas, Louis, 31200 Toulouse (FR); GUY, Jean-Yves, Gilbert, 31770 Colomiers (FR); ROBIN, Guillaume, Christophe, Frédéric, 31880 La Salvetat Saint Gilles (FR)
(74) Mandataire: Ipside
(86) Numéro de dépôt international: PCT/FR2015/052894
(87) Numéro de publication internationale: WO 2016/066950

(56) Documents cités:
- US-A1- 2005 024 041
- US-A1- 2013 110 446

## Description

La présente invention se rapporte à un banc de tests pour des appareillages électriques et électroniques, notamment des calculateurs, notamment destinés à l'aéronautique.

Lors du développement de tels appareillages, il est prévu des tests destinés à en vérifier le bon fonctionnement, avant que ces appareillages ne soient implémentés sur des véhicules, notamment sur des avions, afin de minimiser, et de préférence supprimer, les risques de disfonctionnements qui pourraient être fatals en situation opérationnelle.

De tels bancs existent, qui sont adaptés, chacun, à un appareillage ou à un type d'appareillage donné. Un banc comprend généralement un ensemble de relais et de multiplexeurs configurés pour y connecter un appareillage et le relier à des instruments de test, généralement des instruments « sur étagère », c'est-à-dire disponibles sur le marché et/ou interchangeables entre deux bancs. Ces instruments de test peuvent être du type ampèremètre, voltmètre, ohmmètre, générateur de fonction, sans que cette liste soit limitative.

Le document US 2013/0110446 divulgue un dispositif d'instrumentation de test comportant une interface configurable.

De tels bancs ne permettent pas une modification simple d'un programme de tests. Ils ne sont pas non plus adaptés à une modification de la structure d'un appareillage en cours de développement, en mise au point ou lors d'une mise à jour en cours de développement, en mise au point ou lors d'une mise à jour et au test de plusieurs appareillages différents. Ils nécessitent une adaptation de conception spécifique à développer chaque appareillage.

L'invention a pour but de proposer un banc :
- permettant de simplifier le développement, la mise au point et la modification des programmes de test ;
- permettant la tenue de cadences de productions élevées par l'augmentation de la productivité du banc, en réduisant le temps de test et/ou en ayant une capacité à tester plusieurs calculateurs en même temps ; et,
- dont l'architecture matérielle et logicielle est pensée pour maximiser le taux de disponibilité du banc en prenant en compte les aspects de fiabilité et de maintenance de ce dernier.

Pour atteindre son but, l'invention propose un banc pour tester un appareillage, notamment pour calculateur, qui comprend :
- au moins un macro-instrument programmable ;
- un ensemble d'instruments de mesure et de génération ;
- un ensemble de charges ;
- des moyens pour commuter des signaux échangés entre ledit appareillage et ledit macro-instrument ; et,
- des moyens pour commuter des signaux échangés entre lesdits ensembles d'instruments de mesure et de génération, les charges et ledit macro-instrument
- une interface externe, qui permet de relier l'appareillage aux premiers moyens de commutation ;
- un premier bus interne, reliant les premiers moyens de commutation avec l'au moins un macro-instrument ;
- un deuxième bus interne, reliant l'au moins un macro-instrument avec les deuxièmes moyens de commutation ; et,
- une interface instrumentation et charges, prévue pour relier les deuxièmes moyens de commutation avec les instruments de mesure et/ou les instruments de génération et/ou avec l'ensemble de charges, c'est-à-dire une interface qui permet de brancher les instruments de mesure et les instruments de génération, ainsi que l'ensemble de charges, dans le banc ;
le générateur de réseau électrique permettant un paramétrage d'une voie unique via la création dynamique et étant configurable, afin de permettre à l'utilisateur de choisir un motif de réseau à appliquer entre les instruments, les charges et des points d'entrée/sortie de l'appareillage ; et,
comprenant des moyens de fichier pour donner une correspondance entre des noms de signaux et les points d'entrée/sortie ; et, des moyens pour générer un routage de façon automatique lors de la sélection, sur l'au moins un macro-instrument, par l'utilisateur du banc, d'un signal émis par l'appareillage, et, passer des commandes au niveau du macro-instrument ; chacun des au moins un macro-instrument étant piloté par un driver qui gère l'utilisation des instruments de mesure et leur routage.

Un autre objet de l'invention est un programme d'ordinateur pour la mise en œuvre d'un banc de test selon l'invention, comprenant au moins une étape pour le paramétrage de la configuration du macro-instrument et une étape de paramétrage de connexions qui comprend la fourniture d'un fichier qui donne une correspondance entre des noms de signaux et des broches d'entrées/sorties auxquelles est connecté l'appareillage.

D'autres caractéristiques et avantages de l'invention apparaîtront à la lecture de la description détaillée de plusieurs modes d'exécution de l'invention donnés à titre d'exemples non limitatifs, en référence aux dessins annexés dans lesquels :
- la figure 1 est une représentation schématique d'un banc selon l'invention dans son environnement ;
- la figure 2 est une représentation schématique, illustrant des moyens de commutation utilisés dans le banc de la figure 1 ;
- la figure 3 illustre des connections d'un macro-instrument utilisé dans le banc de la figure 1 ;
- la figure 4a illustre une configuration du macro-instrument de la figure 3 ;
- la figure 4b illustre le schéma électrique correspondant à la configuration de la figure 4a;
- la figure 5 est un schéma fonctionnel d'un autre macro-instrument utilisé dans le banc de la figure 1 ;
- la figure 6 illustre des connections du macro-instrument de la figure 5 ;
- la figure 7 illustre un procédé logiciel utilisé pour la mise en œuvre du banc de la figure 1.
- Les figures 8 à 10, illustres des étapes du procédé de la figure 7.

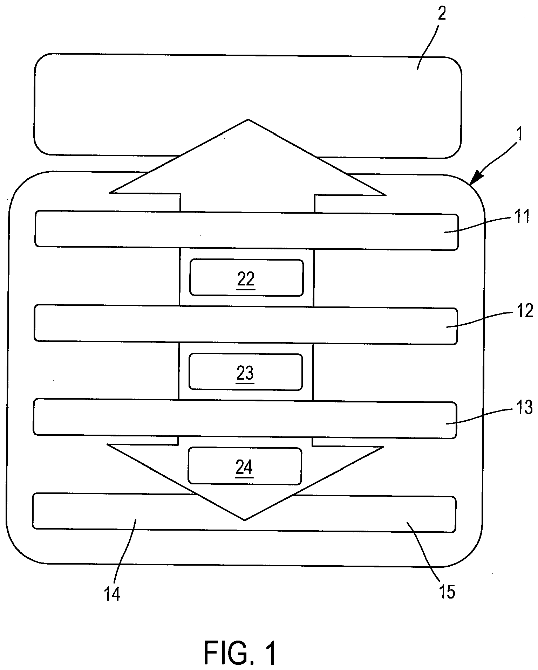

La figure 1 illustre un banc de test 1, prévu pour tester un calculateur 2. Le banc 1 comprend :
- des premiers moyens de commutation 11 prévus pour commuter des signaux en provenance ou à destination du calculateur ;
- des macro-instruments 12, c'est-à-dire des éléments qui permettent d'adapter les différents signaux à l'intérieur du banc ;
- des deuxièmes moyens de commutation 13 prévus pour commuter des signaux en provenance des macro-instruments et à destination d'instruments de test, ou, en provenance d'instruments de génération et à destination des macro-instruments ; et,
des instruments de mesure et de génération 14 et/ou des charges 15.

Le banc comprend en outre :
- une interface externe 21, qui permet de relier le calculateur 2 aux premiers moyens de commutation 11; c'est-à-dire qui permet de brancher le calculateur au banc 1 ;
- un premier bus interne 22, reliant les premiers moyens de commutation 11 avec les macro-instruments ;
- un deuxième bus interne 23, reliant les macro-instruments 12 avec les deuxièmes moyens de commutation 13 ; et,
- une interface instrumentation et charges 24, prévue pour relier les deuxièmes moyens de commutation avec les instruments de mesure et de génération 14 et/ou avec un ensemble de charges 15, c'est-à-dire une interface qui permet de brancher les instruments de mesure et de génération, ainsi qu'un ensemble de charges, dans le banc 1.

Le banc est adapté pour permettre la circulation de signaux depuis l'appareillage testé, ici le calculateur 2, et/ou vers cet appareillage.

Les moyens de commutation 11, 13 font fonction de couche d'abstraction. Les premiers moyens de commutation 11 permettent de s'affranchir du nombre de voies que présente le calculateur 1. Les deuxièmes moyens de commutation 13 isolent la partie instruments de mesure/instruments de génération que l'on peut ainsi faire évoluer sans impact sur les macro-instruments 12.

Une telle architecture permet de modifier des éléments du système de test 1, 2, par exemple le calculateur à tester, les macro-instruments, les instruments de mesure ou les instruments de génération, avec un impact minimum sur l'ensemble de ce système.

Les instruments de mesure peuvent être notamment un multimètre digital (DMM) ou un oscilloscope digitaliseur de signal (DSO).

Les interfaces 21, 24 sont définies pour permettre l'interconnexion des différents composants matériels et pour permettre de dimensionner les moyens de commutation.

L'interface externe 21 est prévue pour connecter le banc 1 à un ou plusieurs calculateurs. Elle est équipée de paires différentielles décomposables en paire de signaux appareillage, paire de connexions programmables (PINPROG) et paires de charges statiques. Il est aussi possible de compléter l'interface par des moyens d'interface spécifiques ; par exemple, pression, fibre optique, très haute puissance.

Le premier bus interne 22 permet aux adaptations supportées par les macro-instruments d'être reliées aux points de connexion de l'équipement sous test. Il ne concerne pas les configurations dites « statiques » ou numériques. Sa taille détermine le nombre de points différents connectables simultanément aux macro-instruments 12

Le deuxième bus interne 23 permet de connecter les deuxièmes moyens de commutation 13 pour les instruments 14 aux différents macro-instruments 12. Ce bus se compose de :
- paires de mesures ;
- paires de génération ;
- paires de mesures ou génération ;
- paires de génération et sondes pour tests d'isolement.

L'interface instrumentation 24 est un bus qui permet de connecter les différents instruments 14, ainsi que les charges 15, aux deuxièmes moyens de commutation. Ce bus est avantageusement extensible et permet de s'adapter à différentes configuration du banc 1.

Les premiers moyens de commutation 11 comprennent un sélecteur de signal constitué de multiplexeurs bifilaires permettant de passer des paires d'entrée/sortie du calculateur 2, dont le nombre est avantageusement extensible, vers des paires constituant le premier bus interne 22.

Les deuxièmes moyens de commutation 13 comprennent un premier sélecteur, dit sélecteur d'instruments. Le sélecteur d'instrument permet de connecter des instruments de mesure sur des points d'entrée/sortie des macro-instruments, via le deuxième bus interne 23. Il comprend avantageusement une matrice de communication reliant les instruments 14 avec le deuxième bus interne 23. Cette matrice comprend, côté instruments, des paires constituant chacune un point d'entrée/sortie d'un instrument, et, côté bus interne 23, des paires de mesure.

Les deuxièmes moyens de commutation 13 comprennent en outre un deuxième sélecteur, dit sélecteur de ressources. Le sélecteur de ressources permet de connecter des instruments de génération sur des points d'entrée/sortie des macro-instruments, via le deuxième bus interne 23. Il comprend avantageusement une matrice de communication reliant les instruments de génération 15 avec le deuxième bus interne 23. Cette matrice comprend, côté instruments de génération, des paires constituant chacune un point d'entrée/sortie d'un instrument de génération, et, côté bus interne 23, des paires de génération.

Un support de signaux dynamiques est porté par une structure formant rack nommée « rack SD ». Ce dernier forme un cœur immuable du banc 1. Il comprend :
- une partie mécanique qui permet de le disposer dans une baie standard, par exemple au format 19 pouces ;
- un tiroir d'alimentation, pour alimenter des éléments actifs du rack ;
- un circuit imprimé (PCB) passif, dit « fond de panier SD » qui en accueille les différentes fonctionnalités ; et,
- un connecteur de chaînage, qui permet d'étendre la taille de ses différentes fonctionnalités.

Le banc 1 possède un système de sécurité permettant de désactiver les sorties et ainsi éviter tout risque électrique pour l'utilisateur. Un signal tout ou rien est prévu dans le rack SD, sur l'ensemble des connecteurs 32, afin de permettre à un élément dit « intelligent » de traiter une opération associée à la déconnexion ou à l'absence de connexion à un appareillage à tester.

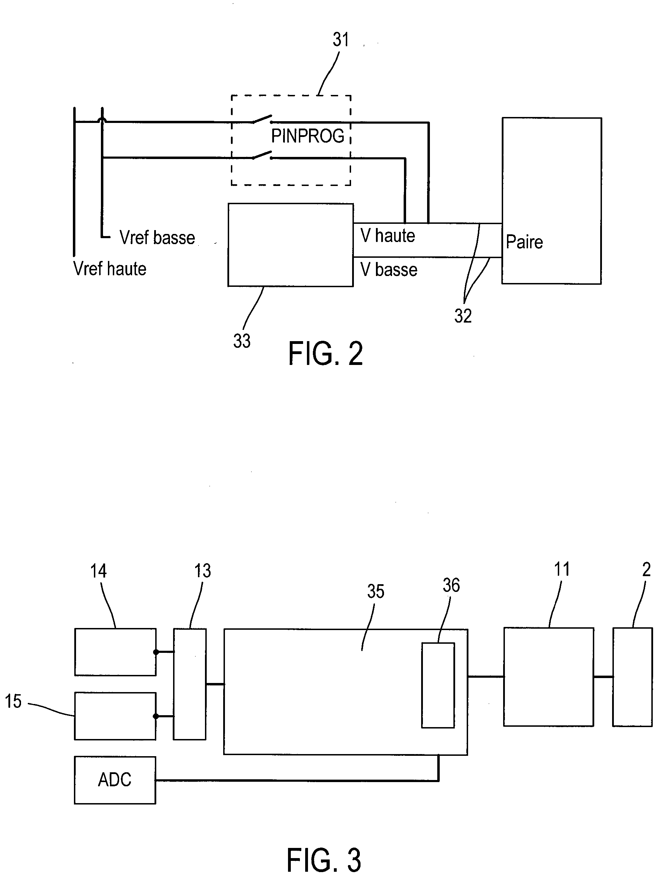

Le banc 1 comprend une fonctionnalité de brassage illustrée à la figure 2. Cette fonction de brassage permet d'éviter un câblage entre la voie du fond de panier SD, les premiers moyens de commutation et la paire de connecteurs considérée. Le but de cette commutation est principalement d'aiguiller un signal « appareillage » vers une des paires disponibles sur le bus interne du banc 1. La fonction de brassage permet de fixer l'état d'une voie quel que soit le test et l'appareillage sous test.

Un macro-instrument permet d'adapter les différents signaux à l'intérieur du banc, en lieu et place d'une interface spécifique, telle qu'elle était prévue et utilisée dans les bancs de l'art antérieur. On va maintenant décrire des macro-instruments en référence aux figures 3, 4a, 4b, 5 et 6.

La figure 3 illustre un générateur de réseau électrique 35. Ce générateur 35 répond à un besoin de flexibilité nécessaire pour le passage de tests unitaires.

Le générateur de réseau électrique 35 permet le paramétrage d'une voie unique via la création dynamique de schémas électriques plus ou moins complexes, ce qui permet de s'affranchir d'un câblage spécifique à l'intérieur du banc 1. Il est configurable, afin de permettre à l'utilisateur de choisir le motif du réseau à appliquer entre les instruments 14, les charges 15 et les points d'entrée/sortie du calculateur 2. En outre, il permet la réorganisation de fils qui sortent non-ordonnés du sélecteur d'instrument par paires. Il comprend un étage de commutation 36 qui permet de sélectionner des fils en provenance des moyens de commutation 11.

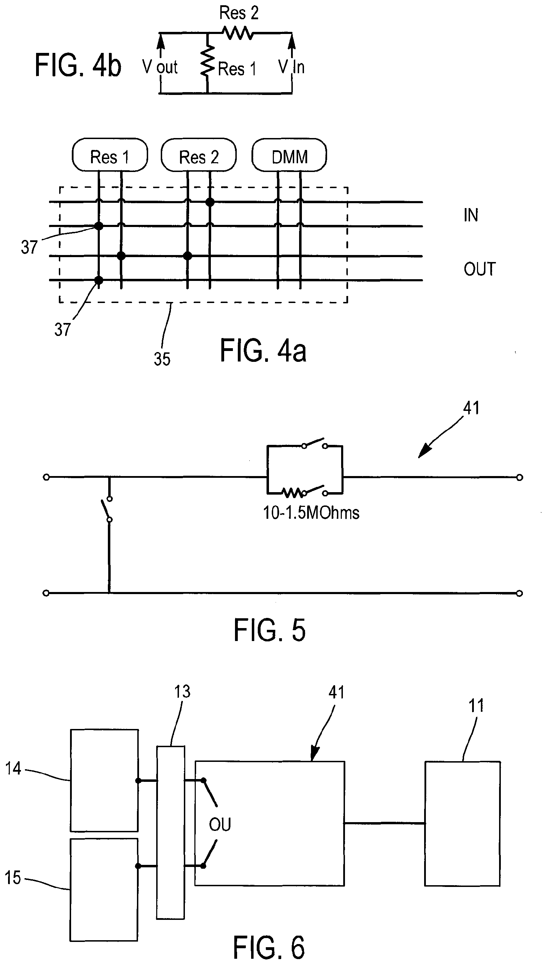

La figure 4a illustre un exemple d'implémentation pour le macro-instrument de la figure 3. Comme illustré à la figure 4a, un tel macro-instrument peut comprendre deux lignes d'entrée (IN) et deux lignes de sortie (OUT), représentées horizontalement. Il comprend en outre des paires de lignes pour deux résistances res1, res2 et pour un multimètre digital DMM ; ces lignes sont représentées verticalement et formant une matrice de connexions avec les lignes d'entrée IN et de sortie OUT. Ces connexions peuvent être ouvertes ou fermées, selon le motif du câblage que l'on souhaite obtenir et/ou selon la mesure que l'on veut effectuer.

Dans la configuration illustrée à la figure 4a, les connexions fermées sont représentées par un point 37 ; cette configuration est conforme au schéma électrique de la figure 4b.

Les figures 5 et 6 illustrent un exemple d'un macro-instrument 41 de type « multi ». Ce macro-instrument répond à un besoin de parallélisme pour le test de plusieurs voies simultanées. Il permet le test de plusieurs voies simultanées en plaçant une résistance en parallèle ou en série et en permettant la génération de tensions sur ses bornes. Le macro-instrument multi est configurable afin de permettre à l'utilisateur de choisir les résistances série ou parallèle à appliquer en simultané entre les instruments 14 et les points d'entrée/sortie du calculateur 2. Un tel macro-instrument peut être utilisé pour les tests de diaphonie.

La figure 6 illustre la configuration générale d'un tel macro-instrument 41.

Le macro-instrument 41 est prévu pour que l'ensemble des fils en provenance des bus internes 22, 23 puissent y être connectées. Chaque paire issue d'un bus peut être connectée à la terre, ou à une tension générée par le bus en provenance des instruments de génération 14, et peut être court-circuitée.

Un autre type de macro-instrument, non illustré, est de type « bus numérique ». Il permet une communication avec le logiciel interne au calculateur, lorsqu'il existe, pour la gestion des tests. Cette fonctionnalité nécessite une connexion permanente avec le calculateur 2, tout au long du test.

Le bus numérique permet de faire un test fonctionnel d'une ou plusieurs voies. Cela nécessite un certain nombre de voie en parallèle ; des moyens pour commuter ces voies sont avantageusement prévus pour minimiser les coûts.

Le macro-instrument « bus numérique » est modulaire ; il permet de dimensionner un banc selon les besoins, en permettant de différentier les besoins de simultanéité et d'accès aux voies.

Un autre type de macro-instrument est de type « alimentation ». Il permet de distribuer des alimentations selon les besoins, par exemple 28V ou 115V à 400Hz. Il est configuré pour réaliser des tests tels que des microcoupures.

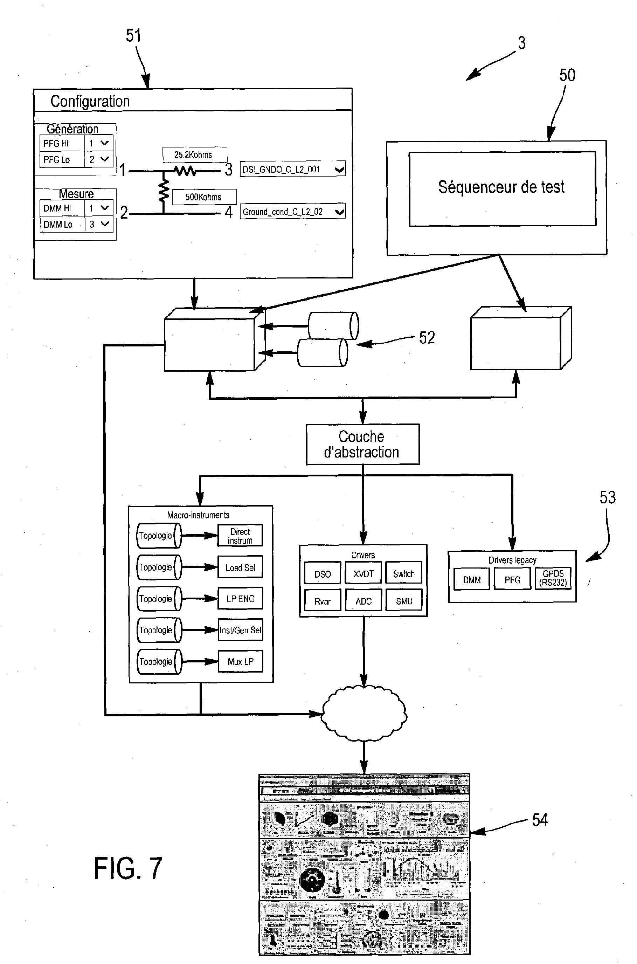

Les figures 7 à 10 décrivent un procédé logiciel de mise en œuvre du banc 1. La figure7 est un organigramme qui illustre particulièrement l'architecture de ce logiciel 3.

Il comprend notamment :
- une étape 50 préalable de paramétrage des tests ;
- une étape 51 préalable de paramétrage des configurations des macro-instruments ;
- une étape 52 préalable de paramétrage des connexions ;
- une étape 53 de configuration des instruments de mesure et de génération ; et,
- une étape 54 de mise en forme des données relatives au test considéré.

L'étape de paramétrage des connexions 52, comprend la fourniture d'un fichier, chargé par le logiciel à son démarrage ; Ce fichier donne la correspondance entre des noms de signaux et des broches d'entrées/sorties du bus externe 21. Grâce à ce fichier, le banc identifie des noms des signaux du calculateur 2, et non de simples numéros de broche ou de relais.

Le logiciel 3 permet deux niveaux de fonctionnalités. Un premier niveau de configuration des macro-instruments, puis un second niveau de création de pas de tests de plus haut niveau. Les pas de tests seront donc constitués de configurations de macro-instruments, d'instruments de mesure et d'instruments de génération. Cette approche permet de fournir à la fois suffisamment de liberté au développeur, et permet de créer rapidement des pas de test pour un ensemble de voies.

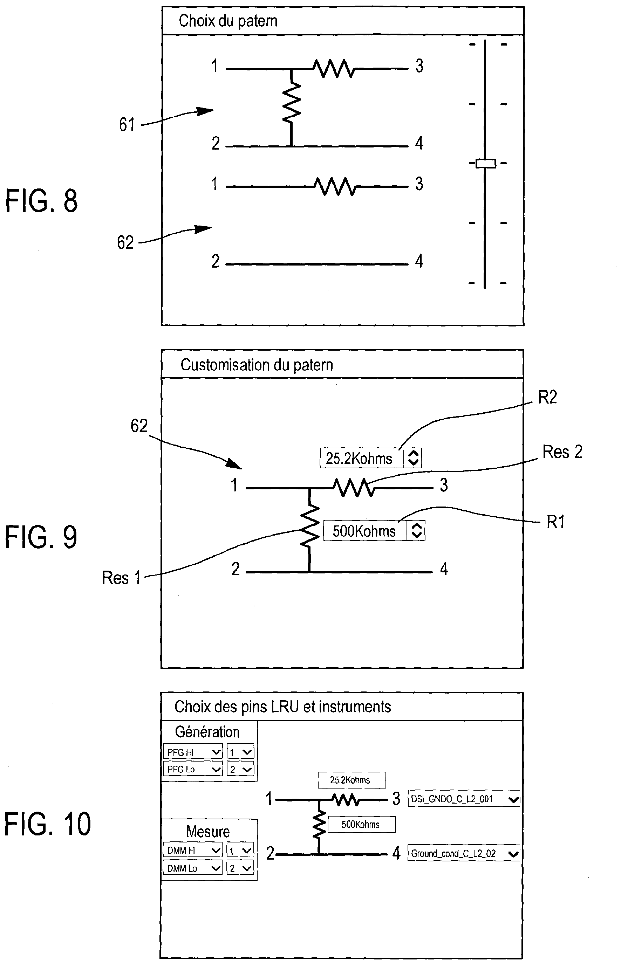

Les : figures 8 à 10 illustrent un exemple de paramétrage 51 d'un macro-instrument générateur de réseau électrique 35.

Comme illustré à la figure 8, on choisit d'abord un schéma électrique, parmi les schémas qui peuvent être réalisés par ce macro-instrument. Dans cet exemple, deux schémas 61, 62 sont possibles.

Comme illustré à la figure 9, le schéma 61 est choisi ; il comporte deux résistances Res1, Res2. On choisit alors les valeurs respectives R1, R2 des résistances Res1, Res2.

Puis, comme illustré à la figure 10, on choisit un potentiel appliqué à chaque ligne et un type de mesure à effectuer entre deux points choisis (point 1, point 3) du schéma.

En mode automatique, les pins LRU sont sélectionnable par liste. Les points de génération/acquisitions sont modifiables, le logiciel gère le routage des points.

Les pas de tests sont généralement constitués d'opérations à appliquer sur un ensemble de point. Le banc 1 intègre pour cela une interface permettant de décrire un test à l'étape 50, et de l'appliquer à un ensemble de points.

Un routage est géré de façon automatique lors de la sélection, sur un macro-instrument, par un utilisateur du banc, d'un signal émis par le calculateur.

Des commandes sont passées au niveau macro-instrument ; chaque macro-instrument est piloté par un driver qui gère l'utilisation des instruments de mesure et leur routage sur les différents macro-instruments. Les macro-instruments gèrent donc un mutex d'accès (de l'anglais : mutual exclusion, exclusion mutuelle, en français) qu'ils activent avant toute commande à un instrument et qu'ils relâchent après chaque mesure.

Le banc mémorise les routes utilisées sur le deuxième bus interne, dédié aux macro-instruments, afin d'éviter des utilisations simultanées. Ce mécanisme permet de pouvoir réaliser un test de diaphonie avec un macro-instrument de type multi 41, et, simultanément un test de voies unitaires sur un générateur de réseau électrique 35 ou de puissance sur le Multi. Afin de permettre la programmation de cette simultanéité, le logiciel est découpé en bloc de tests par macro-instruments. Ces blocs de test sont de préférence référencés par des chapitres de test.

Bien sûr, l'invention n'est pas limitée aux modes de réalisation préférés qui viennent d'être décrits, mais au contraire l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

## Revendications

1. Banc de test (1) pour appareillage (2), notamment pour calculateur, comprenant:
- au moins un macro-instrument programmable (12), permettant d'adapter différents signaux à l'intérieur dudit banc et comprenant un générateur de réseau électrique (35) ;
- un ensemble d'instruments de mesure et de génération (14) ;
- un ensemble de charges passives (15) ;
- des premiers moyens (11) pour commuter des signaux électriques échangés entre ledit appareillage (2) et ledit au moins un macro-instrument (12) ;
- des deuxièmes moyens (13) pour commuter des signaux électriques échangés entre l'ensemble d'instruments de mesure et de génération (14), les charges (15) et ledit au moins un macro-instrument (12) ;
- une interface externe (21), qui permet de relier ledit appareillage (2) auxdits premiers moyens de commutation (11) ;
- un premier bus interne (22), reliant lesdits premiers moyens de commutation (11) avec ledit au moins un macro-instrument ;
- un deuxième bus interne 23, reliant ledit au moins un macro-instrument (12) avec lesdits deuxièmes moyens de commutation 13 ; et,
- une interface instrumentation et charges (24), prévue pour relier lesdits deuxièmes moyens de commutation (13) avec lesdits instruments de mesure (14) et/ou les instruments de génération (14) et/ou avec ledit ensemble de charges (15), c'est-à-dire une interface qui permet de brancher les instruments de mesure et les instruments de génération, ainsi que l'ensemble de charges, dans le banc (1) ; ledit générateur de réseau électrique (35) permettant un paramétrage d'une voie unique via la création dynamique et étant configurable, afin de permettre à l'utilisateur de choisir un motif de réseau à appliquer entre lesdits instruments (14), lesdites charges (15) et des points d'entrée/sortie dudit appareillage (2) : et, comprenant en outre :- des moyens de fichier pour donner une correspondance entre des noms de signaux et lesdits points d'entrée/sortie ;
et,- des moyens pour générer un routage de façon automatique lors de la sélection, sur ledit au moins un macro-instrument, par l'utilisateur du banc, d'un signal émis par l'appareillage, et, passer des commandes au niveau dudit macro- instrument ; chacun desdits au moins un macro-instrument étant piloté par un driver qui gère l'utilisation des instruments de mesure et leur routage.

2. Banc selon la revendication 1, selon lequel les premiers moyens de commutation (11) comprennent un sélecteur de signal constitué de multiplexeurs bifilaires permettant de passer des paires d'entrée/sortie depuis l'appareillage (2), vers des paires du premier bus interne (22), le nombre desdites paires étant de préférence extensible.

3. Banc selon l'une des revendications 1 et 2, selon lequel les deuxièmes moyens de commutation (13) comprennent :
- un premier sélecteur, qui permet de connecter des instruments de mesure (14) sur des points d'entrée/sortie de l'au moins un macro-instrument, via le deuxième bus interne (23) et en ce qu'il comprend de préférence une matrice de communication reliant lesdits instruments de mesure (14) avec ledit deuxième bus interne (23), ladite matrice comprenant, du côté desdits instruments de mesure (14), des paires constituant chacune un point d'entrée/sortie d'un instrument, et, du côté dudit bus interne (23), des paires de mesure ; et,
- un deuxième sélecteur qui permet de connecter des instruments de génération sur des points d'entrée/sortie de l'au moins un macro-instruments, via ledit deuxième bus interne (23) et en ce qu'il comprend
- de préférence une matrice de communication reliant lesdits instruments de génération (14) avec ledit deuxième bus interne (23), ladite matrice comprenant, du côté desdits instruments de génération, des paires constituant chacune un point d'entrée/sortie d'un instrument de génération, et, du côté dudit bus interne (23), des paires de génération.

4. Programme d'ordinateur (3) pour la mise en œuvre d'un banc de test (1) pour appareillage (2) selon l'une des revendications précédentes, comprenant au moins une étape (51) pour le paramétrage de la configuration de l'au moins un macro-instrument (12) et une étape (52) de paramétrage de connexions qui comprend la fourniture d'un fichier qui donne une correspondance entre des noms de signaux et des broches d'entrées/sorties auxquelles est connecté ledit appareillage (2).

## Patentansprüche

1. Prüfstand (1) für eine Apparatur (2), insbesondere für einen Rechner, umfassend:
- mindestens ein programmierbares Makroinstrument (12), ermöglichend, unterschiedliche Signale im Inneren des Standes anzupassen, und umfassend einen Stromnetzgenerator (35) ;
- eine Gruppe von Mess- und Erzeugungsinstrumenten (14);
- eine Gruppe von passiven Ladungen (15);
- erste Mittel (11) zum Umschalten von elektrischen Signalen, die zwischen der Apparatur (2) und dem mindestens einen Makroinstrument (12) ausgetauscht werden;
- zweite Mittel (13) zum Umschalten von elektrischen Signalen, die zwischen der Gruppe von Mess- und Erzeugungsinstrumenten (14), den Ladungen (15) und dem mindestens einen Makroinstrument (12) ausgetauscht werden;
- eine externe Schnittstelle (21), die ermöglicht, die Apparatur (2) mit den ersten Umschaltmitteln (11) zu verbinden;
- einen ersten internen Bus (22), der die ersten Umschaltmittel (11) mit dem mindestens einen Makroinstrument verbindet;
- einen zweiten internen Bus (23), der das mindestens eine Makroinstrument (12) mit den zweiten Umschaltmitteln (13) verbindet; und
- eine Instrumentierungs- und Ladungsschnittstelle (24), vorgesehen zum Verbinden der zweiten Umschaltmittel (13) mit den Messinstrumenten (14) und/oder den Erzeugungsinstrumenten (14) und/oder mit der Gruppe von Ladungen (15), d. h. eine Schnittstelle, die ermöglicht, die Messinstrumente und die Erzeugungsinstrumente sowie die Gruppe von Ladungen in dem Stand (1) anzuschließen; wobei der Stromnetzgenerator (35) eine Parametrisierung eines einzigen Wegs mittels der dynamischen Einrichtung ermöglicht und konfigurierbar ist, um dem Nutzer zu ermöglichen, ein zwischen den Instrumenten (14), den Ladungen (15) und Eingangs-/Ausgangspunkten der Apparatur (2) anzuwendendes Netzmuster auszuwählen; und weiterhin umfassend: - Dateimittel zum Angeben einer Korrespondenz zwischen Namen von Signalen und den Eingangs-/Ausgangspunkten und - Mittel zum automatischen Erzeugen eines Routings eines Signals, das von der Apparatur abgegeben wird, ab der Auswahl auf dem mindestens einen Makroinstrument durch den Nutzer des Standes und Leiten von Befehlen auf der Ebene des Makroinstruments; wobei jedes von dem mindestens einen Makroinstrument von einem Treiber gesteuert wird, der die Verwendung von Messinstrumenten und deren Routing verwaltet.

2. Stand nach Anspruch 1, wobei die ersten Umschaltmittel (11) einen Signalwähler umfassen, der aus bifilaren Multiplexern besteht, die ein Lenken von Eingangs-/Ausgangspaaren von der Apparatur (2) in Richtung von Paaren des ersten internen Busses (22) ermöglichen, wobei die Anzahl der Paare vorzugsweise erweiterbar ist.

3. Stand nach einem der Ansprüche 1 und 2, wobei die zweiten Umschaltmittel (13) umfassen:
- einen ersten Wähler, der ermöglicht, Messinstrumente (14) mit Eingangs-/Ausgangspunkten von mindestens einem Makroinstrument mittels des zweiten internen Busses (23) zu verbinden, und wobei er vorzugsweise eine Kommunikationsmatrix umfasst, die die Messinstrumente (14) mit dem zweiten internen Bus (23) verbindet, wobei die Matrix auf der Seite der Messinstrumente (14) Paare, die jeweils einen Eingangs-/Ausgangspunkt eines Instruments bilden, und auf der Seite des internen Busses (23) Messpaare umfasst; und
- einen zweiten Wähler, der ermöglicht, Erzeugungsinstrumente mit Eingangs-/Ausgangspunkten von mindestens einem der Makroinstrumente mittels des zweiten internen Busses (23) zu verbinden, und wobei er umfasst
- vorzugsweise eine Kommunikationsmatrix, die die Erzeugungsinstrumente (14) mit dem zweiten internen Bus (23) verbindet, wobei die Matrix auf der Seite der Erzeugungsinstrumente Paare, die jeweils einen Eingangs-/Ausgangspunkt eines Erzeugungsinstruments bilden, und auf der Seite des internen Busses (23) Erzeugungspaare umfasst.

4. Computerprogramm (3) zur Umsetzung eines Prüfstands (1) für eine Apparatur (2) nach einem der vorhergehenden Ansprüche, umfassend mindestens einen Schritt (51) für die Parametrisierung der Konfiguration von mindestens einem Makroinstrument (12) und einen Schritt (52) der Parametrisierung von Verbindungen, die die Lieferung einer Datei umfassen, die eine Korrespondenz zwischen Namen von Signalen und Eingangs-/Ausgangspins, mit denen die Apparatur (2) verbunden ist, angibt.

## Claims

1. Test bench (1) for testing equipment (2), in particular for a computer, comprising:
- at least one programmable macro-instrument (12) for adapting various signals inside said bench and comprising an electric network generator (35);
- a set of measurement and generation instruments (14);
- a set of passive loads (15);
- first means (11) for switching electric signals exchanged between said equipment (2) and said at least one macro-instrument (12);
- second means (13) for switching electric signals exchanged between the set of measurement and generation instruments (14), the loads (15) and said at least one macro-instrument (12);
- an external interface (21), which enables said equipment (2) to be connected to said first switching means (11);
- a first internal bus (22), connecting said first switching means (11) with said at least one macro-instrument;
- a second internal bus (23), connecting said at least one macro-instrument (12) with said second switching means (13); and,
- an instrumentation and loads interface (24), provided to connect said second switching means (13) with said measurement instruments (14) and/or generation instruments (14) and/or with said set of loads (15), i.e. an interface which enables the measurement instruments and the generation instruments, as well as the set of loads, to be connected to the bench (1); said electric network generator (35) allowing a single channel to be configured via dynamic creation and being configurable, in order to allow the user to select a network pattern to be applied between said instruments (14), said loads (15) and input/output points of said equipment (2): and, further comprising:- file means for giving a match between signal names and said input/output points; and,- means for generating a routing automatically during the selection, on said at least one macro-instrument, by the user of the bench, of a signal transmitted by the equipment, and, issuing commands at said macro-instrument; each of said at least one macro-instrument being controlled by a driver which manages the use of the measurement instruments and the routing thereof.

2. Bench according to claim 1, wherein the first switching means (11) comprise a signal selector consisting of two-wire multiplexers for switching from input/output pairs of the equipment (2) to pairs of the first internal bus (22), the number of said pairs preferably being extendible.

3. Bench according to one of claims 1 and 2, wherein the second switching means (13) comprise:
- a first selector, which enables measurement instruments (14) to be connected to input/output points of the at least one macro-instrument, via the second internal bus (23) and wherein it preferably comprises a communication matrix connecting said measurement instruments (14) with said second internal bus (23), said matrix comprising, on said measurement instruments (14) side, pairs that each constitute an input/output point of an instrument, and, on said internal bus (23) side, measurement pairs; and,
- a second selector which enables generation instruments to be connected to input/output points of the at least one macro-instrument, via said second internal bus (23) and wherein it comprises
- preferably a communication matrix connecting said generation instruments (14) with said second internal bus (23), said matrix comprising, on said generation instruments side, pairs that each constitute an input/output point of a generation instrument, and, on said internal bus (23) side, generation pairs.

4. Computer program (3) for implementing a test bench (1) for testing equipment (2) according to one of the preceding claims, comprising at least one step (51) of configuring the parameters of the at least one macro-instrument (12) and a step (52) of configuring connections which comprises supplying a file that gives a match between signal names and input/output pins to which said equipment (2) is connected.
